# EUROPEAN PATENT APPLICATION

(11) **EP 0 581 377 A1**
(43) Date of publication of application: **02.02.1994**
(21) Application number: 93202173.6
(22) Date of filing: 22.07.1993
(51) Int. Cl.: H04N 5/74, G03B 21/56, G03B 21/10

(54) **A rear television receiver**

(30) Priority: 28.07.1992 US 922706
(71) Applicant: Philips Electronics N.V., 5621 BA Eindhoven (NL)
(72) Inventor: Bocko, John, c/o INT. OCTROOIBUREAU B.V., NL-5656 AA Eindhoven (NL)
(74) Representative: Cuppens, Hubertus Martinus Maria

(57) **Abstract**

A rear projection television receiver for mounting in a wall of a building, having a substantially rectangular enclosure, the enclosure having at least one substantially planar surface with an opening therein for receivably mounting a rear projection screen, a light source for generating a light beam modulated with a video signal, the light source being situated inside the enclosure, and projection lenses for directing the light beam along a light path to impinge on an inside surface of the rear projection screen. In order to create the illusion of a flat panel display hung on a wall, the enclosure is position behind the wall and includes an extension collar mounted to the opening in the planar surface of the enclosure where the rear projection screen normally would be mounted, the rear projection screen then being mounted to the free end of the extension collar and the projection lenses being adjusted to shift the image plane an amount equivalent to the width of the collar. This extension collar, along with the rear projection screen mounted therein, extends through an opening in the wall. Optionally a decorative picture frame may then be mounted to the extension collar overlying the rear projection screen thereby hiding the edges of the opening in the wall.

## Description

### BACKGROUND OF THE INVENTION

### Field of The Invention

The subject invention relates to projection television receivers, and in particular, rear projection television receivers arranged to be mounted in the wall of a building.

### Description of The Related Art

Projection television receivers provide a way of generating a large television display at an affordable cost. Initially, projection televisions were only available as front projection two-piece combinations including a projector, having the appropriate tuning, audio and video processing circuits and video projecting tubes for projecting light beams containing the picture image, and a separate screen. As with known film projectors, a considerable amount of space is required for these two-piece combinations and care must be taken such that viewers of the display on the screen do not interrupt the light beams being projected to the screen from the projector. These two-piece combination units were followed by one-piece front projection television receivers which folded the light path from the projector to the screen so that both the projector and the screen could be in one housing. However, these one-piece units also required a considerable amount of space. Then followed the advent of rear projection television receivers in which the projector is situated inside the enclosure and projection lenses focus the picture image at an image plane co-planar with the rear projection screen inside of the enclosure. The resultant picture image is then viewable on the other side of the rear projection screen outside of the enclosure.

While rear projection television receivers are generally smaller that the above noted one- and two-piece front projection television receivers, they still are an imposingly bulky piece of furniture which offends many people. In order to satisfy the desire for a large television display while integrating the projection television receiver into the decor of the room environment, custom video installers have been building the rear projection television receivers (and also front projection television receivers) into the wall of the room. A typical rear projection television receiver adapted for this purpose is the WALLVISION television system manufactured and marketed by Philips Consumer Electronics Company. Once installed, this system provides an attractive display while hiding the bulk of the rear projection television enclosure. However, the display looks like a built-in television receiver in that depth of construction is apparent to the viewer.

For may years, visionaries have dreamed of a time when a television display would be in the form of a relatively thin, flat panel which could be hung on a wall as one would an artistic picture. However, despite significant advances in technology, the industry is not even close to turning such dreams into reality.

### SUMMARY OF THE INVENTION

It is an object of the present invention to provide a rear projection television adapted to be built into the wall of a building which gives the illusion of a flat panel display hung on the wall.

This object is achieved in a rear projection television receiver having a substantially rectangular enclosure, said enclosure having at least one substantially planar surface with an opening therein for receivably mounting a rear projection screen, a light source for generating a light beam modulated with a video signal, said light source being situated inside said enclosure, and light path means for directing said light beam along a light path to impinge on an inside surface of said rear projection screen, said light path means further focussing said light beam at a image plane co-planar with said rear projection screen to form a discernable image of said video signal viewable on a outside surface of said rear projection screen outside of said enclosure, characterized in that said rear projection television receiver further comprises extension means affixed in said opening in said planar surface of said enclosure for mounting said rear projection screen at a position spaced away from and parallel to said planar surface of said enclosure, said light path means being adapted such that said image plane is also extended to said position spaced away from and parallel to said planar surface of said enclosure.

One of the reasons why the above built-in rear projection receivers have that "built-in" look is because the rear projection screen and, correspondingly, the image plane of the picture is behind the wall giving the impression of depth of construction to a viewer, while with a flat panel display hung on the wall, the image plane is at or in front of the wall thereby taking away the impression of depth of construction. The subject invention overcomes this limitation by extending the image plane through the wall and mounting the rear projection screen to an extension collar passing through an opening in the wall and connected to a corresponding opening in the rear projection television receiver enclosure. A decorative picture frame may then be position around the rear projection screen in order to enhance the illusion of a flat panel display hung on the will.

### BRIEF DESCRIPTION OF THE DRAWINGS

With the above and additional objects and advantages in mind as will hereinafter appear, the invention will be described with reference to the accompanying drawings, in which:
Fig. 1 is a side exploded view of a rear projection television receiver incorporating the subject invention;

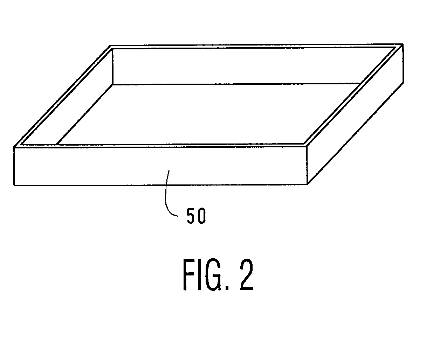

Fig. 2 is a perspective view of the extension collar of the subject invention; and
Fig. 3 is a block diagram of the optical and electrical components in a rear projection television receiver.

### DESCRIPTION OF THE PREFERRED EMBODIMENT

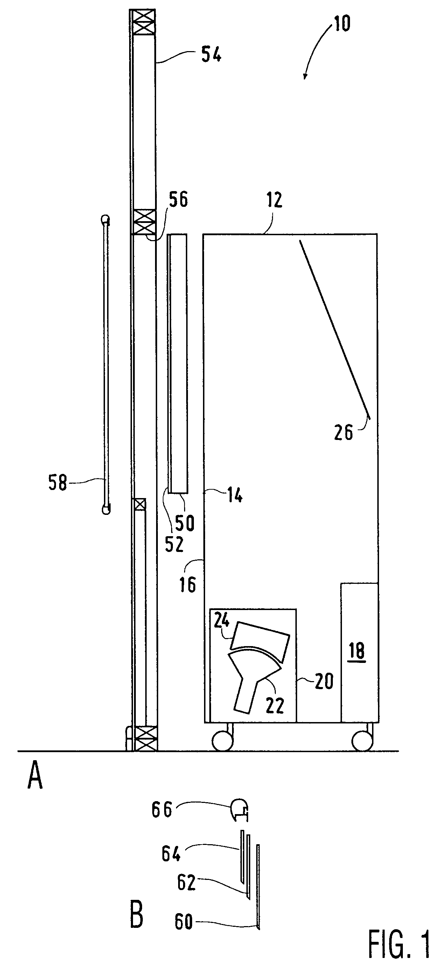

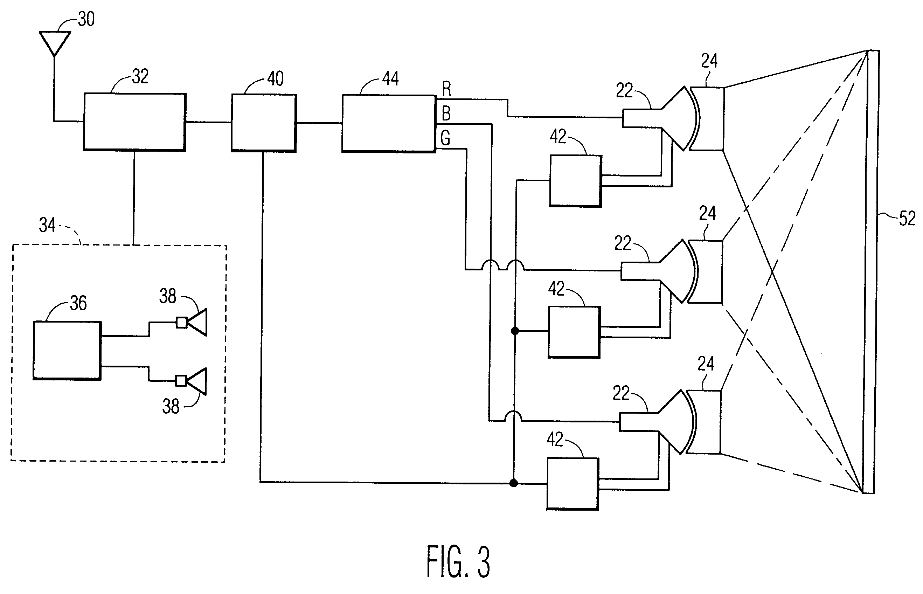

A rear projection television receiver 10 is shown in Fig. 1. The rear projection television receiver 10 includes a substantially rectangular cabinet 12 having an opening 14 in a front face 16 in which a rear projection screen is ordinarily mounted. The cabinet 12 has mounted therein audio/video processing circuitry 18 typically found in television receivers, a light box 20 containing three projection tubes 22 for generating light beams modulated with the video signals for the three basic colors red, blue and green, respectively, three projection lens assemblies 24 associated with the three projection tubes 22 for focussing the respective light beams, and a mirror 26 for directing the three light beams onto the rear projection screen. As shown in Fig. 3, the audio/video processing circuitry 18 typically includes an antenna input connection 30 connected to the input of a TV tuner/front end 32. The TV tuner/front end 32 separates the audio and video portions of the desired received signal and supplies the audio portion to an audio processing circuit 34 which includes an audio amplifier 36 and speakers 38. The TV tuner/front end 32 further supplies the video portion to a sync. separator 40 which separates the synchronization signals from the video portion and supplies horizontal and vertical synchronizing signals to the three deflection circuits 42 for the three projection tubes 22. The sync. separator 40 then supplies the separated video signal to a color decoder 44 which provides the red, green and blue video signals for the respective projection tubes 22.

Instead of mounting the rear projection screen in the opening 14 of the cabinet 12, the subject invention provides an extension collar 50 which is mounted in the opening 14. The rear projection screen 52 is then mounted to the free end of the extension collar 50. As shown in Fig. 1, the rear projection television 10 is positioned behind a wall 54 having an opening 56 therein for accommodating the extension collar 50. The depth of the extension collar 50 is such that the rear projection screen 52 protrudes beyond the other side of the wall 54. While this depth is typically 2-4.5 inches, it should be understood that other depths may be used depending on the actual wall thickness and the desired amount by which the rear projection screen 52 protrudes from the surface of the wall 54. A decorative picture frame 58, including a contrast enhancement filter 60 overlying the rear projection screen 52, a mart board 62, a clear cover sheet 64, which may be glass or plexiglas, and a frame 66, may be attached to the protruding portion of the extension collar 50 for aesthetic purposes and for covering the edges of the opening 56 in the wall 54.

As noted above, the displayed image is focussed at an image plane co-planar with the rear projection screen. Since the extension collar 50 of the subject invention moves the position of the rear projection screen and increases the length of the light path, it should be understood that the image plane need also be moved by adjusting the focussing of the three projection lens assemblies 24. This movement of the image plane takes away any impression of depth in construction which otherwise would be apparent with a standard rear projection television receiver mounted behind the opening 56 in the wall 54, and lends to the illusion of a flat panel video display hung on the wall.

Numerous alterations and modifications of the structure herein disclosed will present themselves to those skilled in the art. However, it is to be understood that the above described embodiment is for purposes of illustration only and not to be construed as a limitation of the invention. All such modifications which do not depart from the spirit of the invention are intended to be included within the scope of the appended claims.

## Claims

1. A rear projection television receiver having a substantially rectangular enclosure, said enclosure having at least one substantially planar surface with an opening therein for receivably mounting a rear projection screen; a light source for generating a light beam modulated with a video signal, said light source being situated inside said enclosure; and light path means for directing said light beam along a light path to impinge on an inside surface of said rear projection screen, said light path means further focussing said light beam at an image plane co-planar with said rear projection screen to form a discernable image of said video signal viewable on an opposite surface of said rear projection screen outside of said enclosure, characterized in that said rear projection television receiver further comprises extension means affixed in said opening in said planar surface of said enclosure for mounting said rear projection screen at a position spaced away from and parallel to said planar surface of said enclosure, said light path means being adapted such that said image plane is also extended to said position spaced away from and parallel to said planar surface of said enclosure.

2. A rear projection television receiver as claimed in claim 1, characterized in that said enclosure and said extension means are sealed to prevent light from entering or exiting from said enclosure except through said rear projection screen.

3. A rear projection television receiver as claimed in claim 2, characterized in that said rear projection television receiver is arranged to be mounted in wall in a building, and said extension means is arranged to extend through said wall such that said rear projection screen is situated on one side of said wall while said enclosure is situated on the opposite side of said wall.

4. A rear projection television receiver as claimed in claim 3, characterized in that said extension means comprises a rectangular collar having an opening substantially the same size as said rear projection screen, said collar having a first end fixedly mounted in said opening in said planar surface of said enclosure and a second end having means for mounting said rear projection screen thereto.

5. A rear projection television receiver as claimed in claim 4, characterized in that said collar extends said rear projection screen from said surface of said enclosure by a distance of 2-4.5 inches.

6. A rear projection television receiver as claimed in claim 4, characterized in that said rear projection television receiver further comprises a decorative picture frame mounted to the end of said extension collar overlying said rear projection screen, whereby when said enclosure is mounted behind the wall, the mounting of said rear projection screen to said collar surrounded by said decorative picture frame on the other side of said wall and the movement of the image plane from a position co-planar with said surface of said enclosure to the position co-planar with said extended rear projection screen gives the illusion of a flat panel display hung on the wall.
